# EUROPEAN PATENT SPECIFICATION

(11) **EP 2 078 180 B1**
(45) Date of publication and mention of the grant of the patent: **23.06.2010**
(21) Application number: 07821411.1
(22) Date of filing: 17.10.2007
(51) Int. Cl.: F25D 31/00, F25D 3/06, F25D 3/08, A47J 41/00

(54) **APPLIANCE FOR COOLING A LIQUID FIT FOR HUMAN CONSUMPTION**
GERÄT ZUM KÜHLEN EINER FÜR MENSCHLICHEN VERZEHR GEEIGNETEN FLÜSSIGKEIT
APPAREIL PERMETTANT DE REFROIDIR UN LIQUIDE APPROPRIÉ À LA CONSOMMATION HUMAINE

(30) Priority: 20.10.2006 EP 06122662
(43) Date of publication of application: 15.07.2009
(73) Proprietor: Nestec S.A., 1800 Vevey (CH)
(72) Inventor: BOUSSEMART, Christophe, 74500 Lugrin (FR)
(74) Representative: Schnyder, Frank Simon
(86) International application number: PCT/EP2007/061046
(87) International publication number: WO 2008/046837

(56) References cited:
- FR-A1- 2 350 560
- GB-A- 1 178 588
- GB-A- 2 222 578
- GB-A- 2 250 576
- US-A- 4 599 872

## Description

### TECHNICAL FIELD

The present invention relates in a general way to an appliance for cooling drinks or liquids fit for human consumption. The invention relates more particularly to an appliance comprising a container designed to hold a liquid fit for human consumption and comprising means for pumping this liquid fit for human consumption so that it is cooled by heat exchange with a cooling body.

### TECHNICAL BACKGROUND

Certain drinks are prepared at a high temperature and are then consumed preferably at lower temperatures, examples being drinks based on coffee, tea or milk. In particular it is known practice to lower the temperature of milk for a baby's bottle, or to cool a green tea in order to serve it chilled in summer.

One way of cooling a drink is to add ice. However, this dilutes the drink and therefore affects its taste. Another way is to simply leave the drink in a cool place, but the slowness of this process is a disadvantage.

Appliances also exist for cooling drinks in a domestic or business context. Document DE20302158U in particular describes a device for cooling a drink in which a tank is mounted above a heat exchanger through which the drink can pass under gravity from the container and then be poured into a cup. The heat exchanger must be filled with a cooling liquid, such as water with ice cubes.

This device has the disadvantage of requiring the use of a cooling means in liquid form which has to be poured into the heat exchanger. The temperature of the cooling liquid, which is usually water with ice cubes, is only zero degrees Celsius, which will chill the drink but is not really sufficient to make it icy, especially as the drink passes through the heat exchanger only once. Moreover, the heat exchanger has to be emptied and refilled frequently because the cooling liquid soon warms up. It is therefore a manual system operating by a simple gravity descent of the liquid to be cooled.

Document US 4 357 809 discloses a container incorporating a refrigerant gel in its structure to keep the drinks at a low temperature. The container is intended to be cooled in a refrigerator and can then be used either for cooling a hot drink or to prevent a cold drink from warming up.

The problem with that container is that it has a small surface area for heat exchange compared with the volume of the drink to be cooled and is therefore more intended for preventing cold drinks from warming up. Moreover, the cooling is passive in that the drink inside the container is not in motion, so the cooling effect is reduced. Also, once the container has warmed up it can no longer be used and must be put back in the refrigerator.

Document CH554139 discloses a machine for preparing and dispensing iced drinks, such as drinks made of a mass of particles of ice mixed with liquid parts. This machine has electrical means for simultaneously cooling and mixing the drink, which is in a transparent tank mounted vertically on top of these means.

The problem with that machine is that it requires a large amount of electrical energy to operate and is not really suitable for quickly cooling a drink. In addition, its construction is expensive and its maintenance complicated. It is also too heavy for domestic use.

GB 1,778,588 discloses an appliance according to the preamble of claim 1.

### SUMMARY OF THE INVENTION

It is an object of the present invention to alleviate the abovementioned drawbacks. More specifically, one object of the present invention is to provide an appliance capable of quickly cooling a liquid fit for human consumption. For example, after brewing tea in boiling water or boiling milk for a baby's bottle, the drink must be able to be cooled in a few moments so that it can be drunk at a predetermined temperature, whether lukewarm, cool or icy.

Another object is to provide an appliance of hygienic design that is easy to use, simple to maintain, light and cheap, with detachable components that can be cleaned easily.

Another object is to provide an appliance, the components of which can be used with the existing product defined in patent application EP 1 656 866 A1. In this way that product, initially designed for frothing milk, could also be used for cooling a drink.

To this end the invention provides an appliance for cooling a liquid fit for human consumption, comprising a container for the liquid which is to be cooled, and cooling means inside the container, which appliance is characterized in that the cooling means comprise at least one removable cooling body shaped in such a way as to define at least one circuit for the liquid fit for human consumption; a motor member also being provided to pump the liquid fit for human consumption around the circuit.

In accordance with the present invention, the liquid fit for human consumption is guided by the cooling body and therefore circulates in contact with the surface of the latter. This feature accelerates the cooling action. Furthermore, the use of a motor member means that the liquid is circulated in closed loops and therefore makes repeated contact with the cooling body.

In accordance with one feature of the invention, the motor member is a pump. In particular, the pump is preferably a rotary pump. In another embodiment the motor member is a positive-displacement pump. It may preferably be an Archimedean screw or other equivalent means of displacement such as a progressive-cavity pump.

In addition, according to the present invention, the cooling body is removable. The cooling body can therefore be cooled down ahead of time by simply placing it in a refrigerator or freezer. With this feature, the appliance according to the present invention does not itself have to remove heat actively. It can therefore be produced for a moderate cost price and can be very simple to maintain.

### BRIEF DESCRIPTION OF THE FIGURES

Other features and advantages of the present invention will be apparent from reading the following description, which is given purely by way of non-restrictive example, with reference to the appended drawings, in which:
- figure 1 is a side view in cross section of a comparative embodiment of the appliance for cooling a liquid fit for human consumption ;
- figure 2 is an enlarged view in cross section of part of the appliance seen in figure 1 showing the container and the cooling body;
- figure 3 is a side view in cross section of an embodiment of the appliance for cooling a liquid fit for human consumption in accordance with the present invention;
- figure 4 is an enlarged view in cross section of part of the appliance seen in figure 3 showing the container with the cooling body and the motor member; and
- figure 5 is a side view in cross section of another embodiment of the present invention, this particular embodiment corresponding to an adaptation of a prior art appliance described previously in patent document EP 1 656 866 A1.

### DETAILED DESCRIPTION OF THE INVENTION

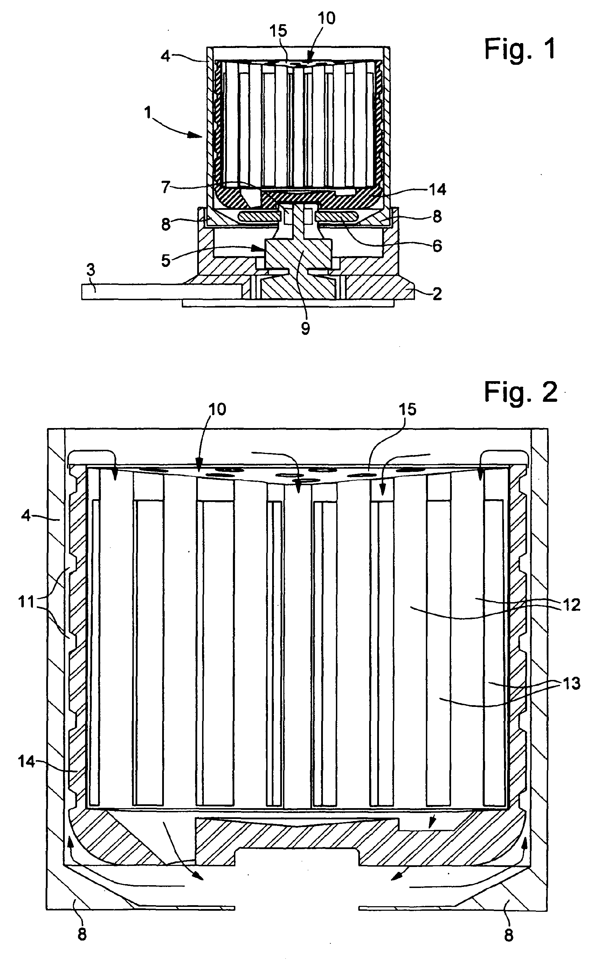

A comparative appliance for cooling a liquid fit for human consumption will now be described with reference to figures 1 and 2. Figure 1 shows an appliance with the general reference 1 for cooling a liquid fit for human consumption. The appliance is placed on an electrical power base 2. The power base 2 is connected to the mains by a power cable 3. In the present example, the cooling appliance 1 is itself a cordless model designed to connect electrically in a manner known to those skilled in the art as soon as it is placed on the power base 2. This feature has the particular advantage of making the appliance easier to handle, particularly when pouring the drink. For this purpose the cooling appliance may advantageously be provided with a handle (not shown). The cooling appliance may also be fitted with a removable lid (not shown) to protect its contents from heat and from other forms of contamination that may come from the outside.

It can also be seen in figure 1 that a container 4 is provided in the upper part of the cooling appliance 1. The container 4 is sealed and is designed to accommodate at least one removable cooling body 10 as well as the liquid fit for human consumption which is to be cooled. The walls of the container may be metal, glass or a synthetic material compatible with liquids fit for human consumption. It may also be a one-piece moulding. It will also be seen that the bottom of the container 4 curves upwards and that it includes an inclined part 8 at its periphery.

Inside the container 4 is a motor member 6 for pumping the liquid fit for human consumption. In the present example, the motor member is in the form of a radial-flow bladed wheel. The bladed wheel 6 is arranged in the bottom centre of the container 4. The bladed wheel does not have to be fixed to the container wall by its shaft. In the present example it simply rests on a boss (not shown) formed in the bottom of the container and about which it can rotate without excessive friction. The advantage of this feature is that it simplifies the dismantling and cleaning of the cooling appliance 1. Alternatively, instead of resting on a boss, the bladed wheel 6 could for example have a central part designed to insert into a depression in the bottom of the container 4.

In the example illustrated, the motor member 6 is driven by magnetic drive means 5 placed in the lower part of the cooling appliance 1 underneath the container 4. In this example the magnetic drive means 5 are essentially a rotary element 7 driven by an electric motor 9. The rotary element 7 may advantageously be housed in the cavity corresponding to the reverse of the boss about which the bladed wheel 6 rotates. This rotary element 7 carries a radial arrangement of several ferromagnetic parts. These ferromagnetic parts are designed to rotate inside the cavity in the bottom of the container when they are driven by the electric motor 9. Above the bottom of the container 4, the motor member 6 itself carries a number of permanent magnets (not shown) arranged around the boss formed in the bottom of the container. These permanent magnets are designed to be rotated by a magnetic coupling with the ferromagnetic parts of the rotary element 7. It will be realised from the above that no mechanical or electrical connection is required between the magnetic drive means 5 and the bladed wheel 6. The latter is turned without contact by the effect of the magnetic field acting through the bottom of the container 4. This type of drive mechanism is known to those skilled in the art. An example of a more detailed description of magnetic drive means compatible with the present embodiment of the invention may be found in patent document EP 1 656 866 A1.

One advantage of the non-intrusive magnetic drive means 5 such as those described above is that they do away with the need to have a transmission shaft passing through the wall of the container. The integrity of the container 4 is thus not breached. Another advantage is that it avoids hygiene problems because it is possible to have a container 4 which is made in one piece with no join lines, and which is therefore easy to clean.

As it rotates, the bladed wheel 6 communicates a circular movement to the liquid fit for human consumption. The centrifugal force associated with the circular movement introduces a radial component whose effect is to push the liquid out towards the periphery of the container 4. The flow of liquid fit for human consumption away from the central zone of the bladed wheel towards its periphery is balanced by a flow of liquid which redescends towards the bladed wheel through the central zone of the container. As indicated earlier, besides the liquid fit for human consumption, which is to be cooled, the container 4 is also designed to accommodate at least one removable cooling body 10. This body represents an obstacle to the circulation of the liquid. Pumped by the motor member 6, the liquid fit for human consumption will therefore be forced to follow a path along channels formed in, or around, the cooling body 10.

The cooling body 10 has a particular geometry designed to optimize the cooling effect by increasing the surface area of the liquid fit for human consumption in contact with the cooling body. For this purpose it is provided with ducts and channels 11, 12 through which the liquid fit for human consumption passes in a predetermined manner, notably in terms of speed and direction. The flow of liquid through the cooling body 10 substantially promotes heat exchange and thus reduces the length of time required to lower the temperature of the liquid fit for human consumption. As figure 1 shows, in the present example the removable cooling body 10 is cylindrical and is positioned above the bladed wheel 6. It exhibits at least one groove 11 describing a helical path around its cylindrical outside wall. When the cooling body is placed in the container, this groove 11 forms a channel between the wall of the container 4 and the cooling body 10. This helical channel or duct 11 is directed in the same direction of rotation as the bladed wheel 6, thus creating an upward duct for the liquid fit for human consumption. It will be understood that in a variant, the groove 11 recessed into the outside wall of the cooling body 10 could be replaced with a groove recessed into the inside wall of the container 4. When the cooling body 10 is in place in the container 4, these two variants are equivalent inasmuch as at least one duct, of helical or other form, is formed between the container wall and the cooling body.

There are also vertical through ducts 12 formed within the thickness of the cooling body 10. As can be seen in figures 1 and 2, the vertical through ducts extend between the top face of the cooling body 10 and its bottom. In the form shown in figure 2, the top face of the cooling body 10 is preferably not quite flat but slightly concave, with a slight slope towards its centre to encourage flow from the periphery of the container towards the centre.

The circuit followed by the liquid fit for human consumption inside the container 4 is as follows. Propelled by the bladed wheel 6 towards the periphery of the container, and guided by the inclined part 8 of the bottom, the liquid will be caused to follow the helical duct 11. The pressure will cause the liquid fit for human consumption to move upwards between the edge of the cooling body 10 and the inside vertical wall of the container 4. On reaching the top of the container, the liquid fit for human consumption flows towards the centre of the inclined top face of the cooling body 10. The liquid fit for human consumption thus encounters the entrance of one of the through ducts 12, and can thus pass back down through this duct 12 towards the bottom of the container and the bladed wheel 6. It will be understood that it is the bladed wheel 6 which causes the liquid fit for human consumption to circulate by a radial centrifugal action and by axial suction on the liquid. Because of the presence of this motor member 6, the liquid can travel around the closed circuit described above many times for efficient cooling.

As noted earlier, in this embodiment the cooling body 10 is roughly cylindrical with an outside diameter approximately equal to the inside diameter of the container 4, so that it can slide into the container. In the present example the cooling body is made up of two complementary elements 14 and 15 which fit into each other. The first element 14, which has the job of collecting the liquid fit for human consumption, surrounds the second element. The second element 15 has the job of acting as a low-temperature heat sink. The first element 14, hereinafter termed the collector, is designed to channel the liquid fit for human consumption that has flowed back down through the ducts 12 into the central zone of the bladed wheel 6. The lower part of the collector 14 acts rather like a funnel for the liquid fit for human consumption.

The second element 15 of the cooling body 10, hereinafter termed the low-temperature heat sink, is designed to slide snugly in through the top of the collector 14. The low-temperature heat sink 15 is cylindrical in shape and has top and bottom faces connected by vertical ducts 12. The cooling body also has compartments 13 between the ducts 12. These hermetically sealed compartments are designed to give up a large quantity of heat during the prior cooling of the removable chilling body 10, and after which, when the appliance is in use, to absorb the heat from the liquid fit for human consumption as it flows down the vertical ducts 12 and around the helical duct 11. The hermetically sealed compartments 13 may for example be filled with a heat-sink gel or liquid of the type known to those skilled in the art, in which case the gel or liquid is preferably introduced into the compartments on one occasion only, during manufacture of the cooling body 10.

With the features described above, the appliance 1 for cooling a liquid fit for human consumption is able to pump the liquid around a closed circuit while cooling it rapidly.

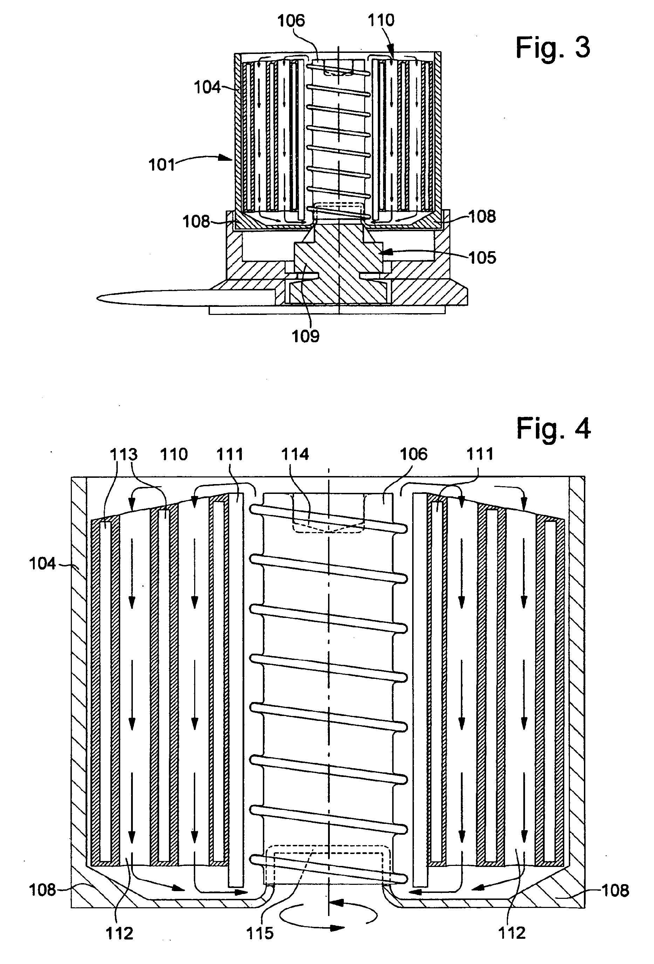

An embodiment of the present invention will now be described with reference to figures 3 and 4. This embodiment is for cooling or keeping cold a liquid having high viscosity and/or containing foam, such as a "frappe" for example. As can be seen in the figures, in this embodiment the motor member 106 for pumping the liquid fit for human consumption is a worm. This worm is designed to raise the liquid and therefore operates like an Archimedean screw. In this example this Archimedean screw is not fixed to the bottom of the container 104 by its shaft. In much the same way as explained in relation to the bladed wheel of the first example, the Archimedean screw is simply located by a boss 115 formed by the bottom of the container 104. The Archimedean screw 106 is vertical and passes through the removable cooling body 110, from the bottom to the top. As figure 4 also shows, the Archimedean screw may have an axial depression 114 in its top end. This depression is for engaging with a stud (not shown) formed on the lower face of the lid (not shown) of the container 104. This feature enables the Archimedean screw to be located at both its ends so as to make it more stable in rotation.

In contrast to the example described with reference to figure 1, in the present embodiment the cooling body 110 is a single component. This component is generally cylindrical with an outside diameter approximately equal to the inside diameter of the container 104. The cooling body 110 also has a vertical cylindrical passage with vertical baffles 111 around its perimeter. This cylindrical passage is designed to leave room for the Archimedean screw 106, and the job of the baffles 111 is to prevent the liquid from being made to rotate by the screw. As in the previous example, the cooling body has vertical ducts 112 connecting its upper face to its lower face. Between these vertical ducts 112 there are also hermetically sealed compartments 113 of specific size and shape, filled with a gel for cooling the liquid fit for human consumption. As figure 3 also shows, the upper face of the cooling body 110 is slightly convex and slopes down towards the edges of the container 104.

Consequently, in this embodiment it is the Archimedean screw which pumps the liquid fit for human consumption in a closed circuit. To this end, the Archimedean screw 106 is driven by the magnetic drive means 105. These drive means may be of any type known to those skilled in the art. However, they are preferably magnetic means similar to those described earlier in relation to the example shown in figure 1. As can be seen in figure 4, the profile of the thread of the screw 106 is flat. When the appliance is running, the greater part of the Archimedean screw 106 is submerged in the viscose liquid fit for human consumption. As the screw turns, the presence of the baffles 111 prevents the liquid from following the movement of rotation. The viscose liquid is therefore forced to travel up the cooling body 110 until it reaches the upper face of the latter. The liquid fit for human consumption can then flow out towards the periphery of the container, on the sloping upper face of the cooling body. The liquid fit for human consumption can thus enter the vertical ducts 112, travel down through them and finally be guided towards the Archimedean screw by the sloping peripheral part 108 of the bottom of the container, where the cycle begins again.

It will also be appreciated that various modifications and/or improvements obvious to those skilled in the art may be made to the embodiments described above without departing from the scope of the present invention as defined in the accompanying claims. In particular, one example would be to add a temperature sensor to measure the temperature of the liquid fit for human consumption and/or the temperature of the container. Another possibility would be to install a temperature indicator and a user-operable button for operating the magnetic drive means. When the button is pressed or activated, it turns on the electric supply to the electric motor 7 or 107, which then turns the motor member 6 or 106. Control of the temperature of the liquid fit for human consumption can also be automated. Thus, the magnetic drive means 5 or 105 can be automatically stopped when a preselected reference temperature is reached. A warning device can also emit a signal to let the user know when the liquid fit for human consumption is ready.

It is naturally also possible, for example, to replace the electric motor 7 or 107 with a spring-wound device which the user winds up, or still more simply to replace it with a crank. Again, the non-intrusive magnetic drive means 7 or 107 could naturally be replaced with mechanical drive means in which a transmission shaft passes through the wall of the container 4 or 104 to drive the motor member 6 or 106 directly. Other geometrical forms of the cooling body 10 or 110, of the motor member 6 or 106, and of the container 4 or 104 may also be used.

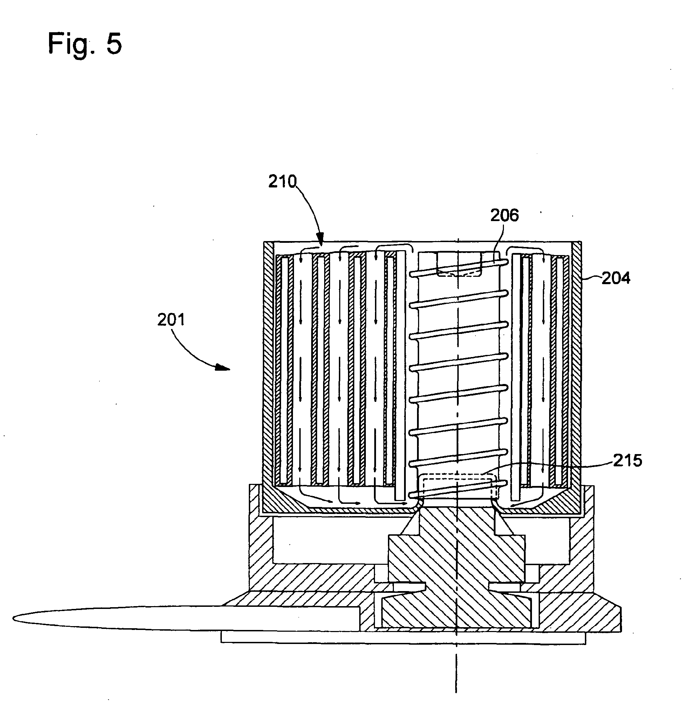

Finally, figure 5 shows yet another embodiment of the appliance for cooling a liquid fit for human consumption in accordance with the present invention: the appliance 201 in this embodiment is very similar to that described earlier with reference to figures 3 and 4. As in the previous example, the appliance, marked 201 in the figure, comprises a container 204 housing a removable cooling body 210, and this cooling body has a cylindrical passage for an Archimedean screw 206 which is itself located on a boss 215 formed on the bottom of the container 204. However, in this new embodiment, the Archimedean screw occupies an off-centre position in the container. The aim of this particular arrangement is to use for the appliance according to the invention the existing product defined in patent application EP 1 656 866 A1. By thus installing an Archimedean screw 206 and a cooling body 210 according to the invention in the container 204 of an appliance initially designed for frothing milk, said appliance can be used for cooling a drink.

## Claims

1. Appliance for cooling a liquid fit for human consumption, comprising a container (104; 204) for the liquid which is to be cooled, and cooling means (106, 110; 206, 210) inside the container, the cooling means comprising at least one removable cooling body (110; 210) shaped in such a way as to define at least one circuit for the liquid fit for human consumption, a motor member (106; 206) being provided to pump the liquid fit for human consumption around the circuit, **characterized in that** the motor member is a positive-displacement rotary pump.

2. Appliance according to Claim 1, **characterized in that** the motor member (106; 206) is an Archimedean screw.

3. Appliance according to Claim 2, **characterised in that** the Archimedean screw is vertically oriented.

4. Appliance according to Claim 2 or 3, **characterised in that** the cooling body comprises an upper face having a convex profile and sloping down towards its periphery.

5. Appliance according to any one of Claims 1 to 3, **characterised in that** the cooling body comprises an upper face having a concave profile and sloping down towards its centre.

6. Appliance according to one of the preceding claims, **characterized in that** the container (104; 204) and the cooling body are of complementary shapes, and **in that** the cooling body is designed to fit into the container.

7. Appliance according to one of the preceding claims, **characterized in that** the container (104; 204) and the cooling body (10; 110; 210) are cylindrical.

8. Appliance according to one of the preceding claims, **characterised in that** the motor member (106; 206) is driven by non-intrusive magnetic drive means (105; 205) positioned underneath the container (104; 204) to drive the motor member remotely through the wall of the container without a mechanical or electrical connection.

9. Appliance according to one of the preceding claims, **characterized in that** the bottom of the container (104; 204) is shaped in such a way as to form positioning means (115; 215) to guide the motor member (106; 206) as it rotates.

10. Appliance according to any of the preceding claim, **characterised in that** the cooling body comprises at least one hermetically sealed compartment (113) filled with a heat-sink substance, which body is **characterized in that** it comprises an upper face and a lower face and at least one first channel (112) designed to channel the liquid fit for human consumption from one face to the other.

11. Appliance according to Claim 10, **characterized in that** the first channel is designed to channel the liquid from the upper face to the lower face.

12. Appliance according to claim 11, **characterised in that** the first channel comprises at least one vertical portion.

13. Appliance according to Claim 11 or 12,
**characterized in that** the cooling body comprises a second channel, such as a helical channel, designed to channel the liquid from the lower face to the upper face.

14. Appliance according to claim 13, **characterised in that** the second channel is open to the exterior and arranged in the outside wall of said body, optionally the first channel comprising a lower portion designed to guide the liquid fit for human consumption towards the centre of the lower face.

15. Appliance according to Claim 11 or 12,
**characterized in that** it comprises a cylindrical passage, such as a vertical passage, designed to accommodate an Archimedean screw (106; 206).

## Patentansprüche

1. Gerät zum Kühlen einer für menschlichen Verzehr geeigneten Flüssigkeit, das aufweist: einen Behälter (104; 204) für die Flüssigkeit, die gekühlt werden soll, und Kühleinrichtungen (106, 110; 206, 210) im Inneren des Behälters, wobei die Kühleinrichtungen wenigstens einen entfernbaren Kühlkörper (110; 210) aufweisen, der in einer derartigen Weise geformt ist, dass er wenigstens einen Kreislauf für die für menschlichen Verzehr geeignete Flüssigkeit definiert, ein Motorelement (106; 206), das bereitgestellt ist, um die für menschlichen Verzehr geeignete Flüssigkeit in dem Kreislauf zu pumpen, **dadurch gekennzeichnet, dass** das Motorelement eine Drehkolbenpumpe mit positiver Verdrängung ist.

2. Gerät gemäß Anspruch 1, **dadurch gekennzeichnet, dass** das Motorelement (106; 206) eine archimedische Schraube ist.

3. Gerät gemäß Anspruch 2, **dadurch gekennzeichnet, dass** die archimedische Schraube vertikal ausgerichtet ist.

4. Gerät gemäß Anspruch 2 oder 3, **dadurch gekennzeichnet, dass** der Kühlkörper eine Oberseite mit einem konvexen Profil aufweist, das in Richtung ihres Umfangs abfällt.

5. Gerät gemäß einem der Ansprüche 1 bis 3, **dadurch gekennzeichnet, dass** der Kühlkörper eine Oberseite mit einem konkaven Profil aufweist, das in Richtung ihrer Mitte abfällt.

6. Gerät gemäß einem der vorhergehenden Ansprüche, **dadurch gekennzeichnet, dass** der Behälter (104; 204) und der Kühlkörper komplementäre Formen haben und dass der Kühlkörper konstruiert ist, um in den Behälter zu passen.

7. Gerät gemäß einem der vorhergehenden Ansprüche, **dadurch gekennzeichnet, dass** der Behälter (104; 204) und der Kühlkörper (10; 110; 210) zylindrisch sind.

8. Gerät gemäß einem der vorhergehenden Ansprüche, **dadurch gekennzeichnet, dass** das Motorelement (106; 206) durch nicht intrusive Magnetantriebseinrichtungen (105; 205) angetrieben wird, die unterhalb des Behälters (104; 204) positioniert sind, um das Motorelement ohne eine mechanische oder elektrische Verbindung durch die Wand des Behälters von fern anzutreiben.

9. Gerät gemäß einem der vorhergehenden Ansprüche, **dadurch gekennzeichnet, dass** der Boden des Behälters (104; 204) in einer derartigen Weise geformt ist, dass Positionierungseinrichtungen (115; 215) ausgebildet werden, um das Motorelement (106; 206) zu führen, während es sich dreht.

10. Gerät gemäß einem der vorhergehenden Ansprüche, **dadurch gekennzeichnet, dass** der Kühlkörper wenigstens eine hermetisch abgedichtete Kammer (113) aufweist, die mit einem Kühlkörpermaterial gefüllt ist, wobei der Körper **dadurch gekennzeichnet ist, dass** er eine Oberseite und eine Unterseite und wenigstens einen ersten Kanal (112) aufweist, der konstruiert ist, um die für menschlichen Verzehr geeignete Flüssigkeit von einer Seite zur anderen zu leiten.

11. Gerät gemäß Anspruch 10, **dadurch gekennzeichnet, dass** der erste Kanal konstruiert ist, um die Flüssigkeit von der Oberseite zu der Unterseite zu leiten.

12. Gerät gemäß Anspruch 11, **dadurch gekennzeichnet, dass** der erste Kanal wenigstens einen vertikalen Abschnitt aufweist.

13. Gerät gemäß Anspruch 11 oder 12, **dadurch gekennzeichnet, dass** der Kühlkörper einen zweiten Kanal, wie etwa einen spiralförmigen Kanal aufweist, der konstruiert ist, um die Flüssigkeit von der Oberseite zu der Unterseite zu leiten.

14. Gerät gemäß Anspruch 13, **dadurch gekennzeichnet, dass** der zweite Kanal nach außen offen ist und in der Außenwand des Körpers angeordnet ist, wobei der erste Kanal wahlweise einen unteren Abschnitt aufweist, der konstruiert ist, um die für menschlichen Verzehr geeigneten Flüssigkeit in Richtung der Mitte der Unterseite zu leiten.

15. Gerät gemäß Anspruch 11 oder 12, **dadurch gekennzeichnet, dass** es einen zylindrischen Durchgang, wie etwa einen vertikalen Durchgang aufweist, der konstruiert ist, um eine archimedische Schraube (106; 206) aufzunehmen.

## Revendications

1. Appareil pour refroidir un liquide approprié à la consommation humaine, comprenant un récipient (104 ; 204) pour le liquide à refroidir, et un moyen de refroidissement (106, 110 ; 206, 210) à l'intérieur du récipient, le moyen de refroidissement comprenant au moins un corps de refroidissement amovible (110 ; 210) conformé de manière à définir au moins un circuit pour le liquide approprié à la consommation humaine, un organe moteur (106 ; 206) étant prévu pour pomper le liquide approprié à la consommation humaine autour du circuit, **caractérisé en ce que** l'organe moteur est une pompe rotative à déplacement positif.

2. Appareil selon la revendication 1, **caractérisé en ce que** l'organe moteur (106 ; 206) est une vis d'Archimède.

3. Appareil selon la revendication 2, **caractérisé en ce que** la vis d'Archimède est orientée verticalement.

4. Appareil selon la revendication 2 ou 3, **caractérisé en ce que** le corps de refroidissement comprend une face supérieure ayant un profil convexe et s'abaissant en direction de sa périphérie.

5. Appareil selon l'une des revendications 1 à 3, **caractérisé en ce que** le corps de refroidissement comprend une face supérieure ayant un profil concave et s'abaissant en direction de son centre.

6. Appareil selon l'une des revendications précédentes, **caractérisé en ce que** le récipient (104 ; 204) et le corps de refroidissement ont des formes complémentaires, et **en ce que** le corps de refroidissement est arrangé pour s'emboîter dans le récipient.

7. Appareil selon l'une des revendications précédentes, **caractérisé en ce que** le récipient (104 ; 204) et le corps de refroidissement (10 ; 110 ; 210) sont cylindriques.

8. Appareil selon l'une des revendications précédentes, **caractérisé en ce que** l'organe moteur (106 ; 206) est actionné par un moyen d'entraînement magnétique (105 ; 205) non-intrusif positionné sous le récipient (104 ; 204) pour entraîner l'organe moteur à distance à travers la paroi du récipient sans liaison mécanique ou électrique.

9. Appareil selon l'une des revendications précédentes, **caractérisé en ce que** le fond du récipient (104 ; 204) est conformé de manière à former un moyen de positionnement (115 ; 215) pour guider l'organe moteur (106 ; 206) en rotation.

10. Appareil selon l'une des revendications précédentes, **caractérisé en ce que** le corps de refroidissement comprend au moins un compartiment fermé hermétiquement (113) rempli d'une substance dissipatrice de chaleur, le corps étant **caractérisé en ce qu'**il comprend une face supérieure et une face inférieure et au moins un premier canal (112) adapté pour conduire le liquide approprié à la consommation humaine d'une face à l'autre.

11. Appareil selon la revendication 10, **caractérisé en ce que** le premier canal est adapté pour conduire le liquide de la face supérieure à la face inférieure.

12. Appareil selon la revendication 11, **caractérisé en ce que** le premier canal comprend au moins une portion verticale.

13. Appareil selon la revendication 11 ou 12, **caractérisé en ce que** le corps de refroidissement comprend un deuxième canal tel qu'un canal hélicoïdal, adapté pour conduire le liquide de la face inférieure à la face supérieure.

14. Appareil selon la revendication 13, **caractérisé en ce que** le deuxième canal est ouvert vers l'extérieur et arrangé dans la paroi extérieure dudit corps, le premier canal comprenant optionnellement une portion inférieure adaptée pour guider le liquide approprié à la consommation humaine en direction du centre de la face inférieure.

15. Appareil selon la revendication 11 ou 12, **caractérisé en ce qu'**il comprend un passage cylindrique, tel qu'un passage vertical, adapté pour recevoir une vis d'Archimède (106 ; 206).
